(19) **Europäisches Patentamt European Patent Office Office européen des brevets**

(11) **EP 2 334 419 B1**

(12) **FASCICULE DE BREVET EUROPEEN**

(45) Date de publication et mention
de la délivrance du brevet:
**31.07.2013 Bulletin 2013/31**

(21) Numéro de dépôt: **09752417.7**

(22) Date de dépôt: **25.09.2009**

(51) Int Cl.:
*B01J 2/16* (2006.01)     *B01D 53/047* (2006.01)
*B01J 20/28* (2006.01)     *C09K 5/06* (2006.01)

(86) Numéro de dépôt international:
**PCT/FR2009/051827**

(87) Numéro de publication internationale:
**WO 2010/034954 (01.04.2010 Gazette 2010/13)**

(54) **FABRICATION D'AGGLOMERAT COMPOSE DE MATERIAU A CHANGEMENT PHASE ET PRESENTANT DES PROPRIETES CONTROLEES**

**HERSTELLUNG EINES AGGLOMERATS, DAS AUS PHASENWECHSELMATERIAL BESTEHT UND KONTROLLIERTE EIGENSCHAFTEN AUFWEIST**

**MANUFACTURE OF AN AGGLOMERATE CONSISTING OF PHASE CHANGE MATERIAL AND HAVING CONTROLLED PROPERTIES**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **25.09.2008 FR 0856443**

(43) Date de publication de la demande:
**22.06.2011 Bulletin 2011/25**

(73) Titulaire: **L'Air Liquide Société Anonyme pour l'Etude et l'Exploitation des Procédés Georges Claude 75007 Paris (FR)**

(72) Inventeurs:
• **GUERET, Vincent**
  **F-75014 Paris (FR)**
• **MONEREAU, Christian**
  **F-75011 Paris (FR)**
• **PULLUMBI, Pluton**
  **F-78000 Versailles (FR)**

(74) Mandataire: **Beroud, Amandine L'air Liquide Direction Propriété Intellectuelle 75, quai d'Orsay F-75321 Paris Cedex 07 (FR)**

(56) Documents cités:
**EP-A- 1 536 128      DE-C1- 19 711 393
FR-A- 2 891 159      FR-A- 2 906 160**

**Description**

L'invention concerne un procédé de fabrication d'un agglomérat, sous forme de billes composé de microcapsules d'un matériau à changement de phase (MCP), réalisé par granulation humide et séchage en lit fluidisé.

Il est connu que les matériaux à changement de phase (MCP) agissent comme des puits thermiques à leur température de changement de phase.

Les MCP peuvent être organiques, telles que les paraffines et les silicones, ou inorganiques, tels que les sels hydratés et les alliages métalliques.

On appelle procédé thermo-cyclique tout procédé cyclique au cours duquel certaines étapes sont exothermiques, c'est-à-dire s'accompagnant d'un dégagement de chaleur, alors que certaines autre étapes sont endothermiques, c'est-à-dire s'accompagnant d'une consommation de chaleur.

Des exemples typiques de procédés thermo cycliques pour lesquels l'invention peut être mise en oeuvre incluent :

- les procédés de séparation de gaz par adsorption modulée en pression, comme le PSA (Pressure swing adsorption = adsorption avec variation de pression), le VSA (Vacuum Swing Adsorption = adsorption sous oscillation de vide), le VPSA (Vacuum Pressure Swing Adsorption= adsorption avec variation de pression et mise sous vide) et le MPSA (Mixed Pressure Swing Adsorption).
- tout procédé mettant en oeuvre une conversion chimique couplée à des cycles d'adsorption modulée en pression, tels que mentionnés ci-dessus, permettant de déplacer l'équilibre des réactions chimiques.

Les procédés de séparation par adsorption modulée en pression reposent sur le phénomène d'adsorption physique et permettent de séparer ou de purifier des gaz par cyclage en pression du gaz à traiter à travers un ou plusieurs lit adsorbant, tel un lit de zéolite, de charbon actif, d'alumine activée, de gel de silice, de tamis moléculaire ou analogues.

Dans le cadre de la présente invention, on désigne, sauf stipulation autre, par les termes « procédé PSA », tout procédé de séparation de gaz par adsorption modulée en pression, mettant en oeuvre une variation cyclique de la pression entre une pression haute, dite pression d'adsorption, et une pression basse, dite pression de régénération. Par conséquent, l'appellation générique procédé PSA est employée indifféremment pour désigner les procédés cycliques suivants :

- les procédés VSA dans lesquels l'adsorption s'effectue sensiblement à la pression atmosphérique, dite « pression haute », c'est-à-dire entre 1 bara et 1,6 bara (bara = bar absolu), préférentiellement entre 1,1 et 1,5 bara, et la pression de désorption, dite « pression basse », est inférieure à la pression atmosphérique, typiquement entre 30 et 800 mbara, de préférence entre 100 et 600 mbara.

- les procédés VPSA ou MPSA dans lesquels l'adsorption s'effectue à une pression haute sensiblement supérieure à la pression atmosphérique, généralement entre 1,6 et 8 bara, préférentiellement entre 2 et 6 bara, et la pression basse est inférieure à la pression atmosphérique, typiquement entre 30 et 800 mbara, de préférence entre 100 et 600 mbara.
- les procédés PSA dans lesquels l'adsorption s'effectue à une pression haute nettement supérieure à la pression atmosphérique, typiquement entre 1,6 et 50 bara, préférentiellement entre 2 et 35 bara, et la pression basse est supérieure ou sensiblement égale à la pression atmosphérique, donc entre 1 et 9 bara, de préférence entre 1,2 et 2,5 bara.
- Les procédés RPSA (Rapide PSA) qui désignent des procédés PSA de cycle très rapide, en général inférieur à la minute.

De manière générale, un procédé PSA permet de séparer une ou plusieurs molécules de gaz d'un mélange gazeux les contenant, en exploitant la différence d'affinité d'un adsorbant donné ou, le cas échéant, de plusieurs adsorbants pour ces différentes molécules de gaz.

L'affinité d'un adsorbant pour une molécule gazeuse dépend de la structure et de la composition de l'adsorbant, ainsi que des propriétés de la molécule, notamment sa taille, sa structure électronique et ses moments multipolaires.

Un adsorbant peut être par exemple une zéolite, un charbon actif, une alumine activée, un gel de silice, un tamis moléculaire carboné ou non, une structure métallo-organique, un ou des oxydes ou des hydroxydes de métaux alcalins ou alcalino terreux, ou une structure poreuse contenant une substance capable de réagir réversiblement avec une ou plusieurs molécules de gaz, telle que amines, solvants physiques, complexants métalliques, oxydes ou hydroxydes métalliques par exemple.

Les effets thermiques qui résultent de l'enthalpie d'adsorption ou de l'enthalpie de réaction conduisent, d'une manière générale, à la propagation, à chaque cycle, d'une onde de chaleur à l'adsorption limitant les capacités d'adsorption et d'une onde de froid à la désorption limitant la désorption.

Ce phénomène cyclique local de battements en température a un impact non-négligeable sur les performances de séparation et l'énergie spécifique de séparation comme le rappelle le document EP-A-1188470.

Un cas particulier couvert dans le cadre du présent brevet est le stockage/ déstockage de gaz dans un réacteur ou adsorbeur contenant au moins en partie un ou des adsorbants. Il s'agit là également d'un procédé thermo cyclique mettant en oeuvre un matériau adsorbant avec libération de chaleur lors du stockage (augmentation de pression) et libération de froid lors du déstockage (diminution de pression)

Dans tous ces cas, une solution permettant de diminuer l'amplitude des battements thermiques consiste à ajouter dans le lit d'adsorbant un matériau à changement de phase (MCP), comme décrit par le document US-A-4,971,605. De cette manière, la chaleur d'adsorption et de désorption, ou une partie de cette chaleur, est adsorbée sous forme de chaleur latente par le MCP, à la température, ou dans le domaine de températures, du changement de phase du MCP. Il est alors possible d'opérer l'unité PSA dans un mode plus proche de l'isotherme.

Le document FR-A-2 891 159 cite des procédés d'extrusion, pastillage, concassage (broyage et tamisage) ou découpage de feuilles pour la production d'agglomérats de microcapsules de MCP.

Le document DE 197 11 393 C1 décrit la fabrication de microparticules en lit fluidisé mais elles ne sont pas constituées de MCP et le document EP 1536 128 mentionne la volonté d'éviter les agglomérats.

Les MCP peuvent être micro encapsulés et ainsi disponibles sous forme de poudre. Plus précisément, les MCP micro encapsulés se présentent sous la forme de microbilles d'un polymère formant une enveloppe imperméable contenant de la cire ou un hydrocarbure saturé linéaire avec le nombre d'atomes de carbone variant entre 14 et 24. La dite micro encapsulation est généralement obtenue par inversion de phase d'une émulsion selon des procédés connus par l'homme de l'art. La dimension moyenne d'une microbille est de l'ordre de 5 micron. La forme générale de la capsule est sphérique mais il s'agit plutôt d'ellipsoïdes ou de patatoïdes. On peut définir leur diamètre comme celui de la sphère qui les contient.

Quand la température augmente, l'hydrocarbure contenu dans la bille absorbe la chaleur et la stocke. Quand la température diminue, l'hydrocarbure contenu dans la microbille restitue la chaleur latente emmagasinée en changeant de phase de liquide au solide. Durant la période de changement de phase, la température demeure approximativement constante (suivant la composition de la cire) et permet de réguler la température à des niveaux bien déterminés par la nature de l'hydrocarbure (ou des hydrocarbures lorsqu'il s'agit de mélange) et en particulier la longueur de la chaine et le nombre d'atomes de carbone. Un exemple commercial de MCP correspondant à cette description est le produit Micronal® de BASF.

Cependant, les MCP micro encapsulés ne peuvent pas être introduits tels quels dans un lit d'adsorbant car il serait difficile d'en contrôler la répartition. En outre, ils seraient entraînés par les flux de gaz circulant dans l'adsorbeur. Il faut donc réaliser préalablement des « agglomérats ». Par « agglomérat », on entend par la suite, un solide de dimension supérieure à 0,1 mm pouvant revêtir différentes formes, en particulier une forme de bille, d'extrudé, de pastille, de concassé obtenu par concassage et tamisage de blocs de dimensions supérieures, ou de plaquette obtenue par découpage de feuilles préalablement compactées, ou autres. Dans le cadre de l'invention, il s'agit plus particulièrement de particules d'aspect sphérique que l'on désignera par le terme de billes.

Une première solution conduit à faire un mélange intime de l'adsorbant -sous forme de poudre ou de cristaux- et des MCP et d'agglomérer le mélange. Les produits obtenus par pression à sec s'avèrent généralement trop fragiles pour une utilisation industrielle. Une agglomération en phase liquide ou humide pose le problème de l'activation de la phase active de l'agglomérat. Il est en effet connu que la majorité des adsorbants doivent être portés à température élevée avant utilisation dans les procédés industriels pour atteindre les performances requises. Le niveau de température nécessaire est généralement supérieur à 200°C, souvent de l'ordre de 300 à 450°C. Ces niveaux de température ne sont pas compatibles avec la tenue mécanique des MCP.

Une deuxième solution consiste à faire des agglomérats uniquement de MCP, sous forme d'une structure facile à manipuler et à introduire dans un adsorbeur.

Cependant, les procédés de fabrication des agglomérats selon l'état actuel de la technique (pastillage sous pression, extrusion...) ne permettent pas d'obtenir des agglomérats avec des propriétés mécaniques et/ou thermiques suffisantes pour être utilisés efficacement dans les procédés thermo cycliques.

Une des raisons est que les conditions opératoires de fabrication de ces agglomérats -par les procédés classiquement utilisés pour la fabrication des bâtonnets, billes ou pastilles d'adsorbants ou catalyseurs- sont limitées par la résistance intrinsèque des MCP eux-mêmes. De par leur nature, ils ne peuvent pas supporter les pressions ou températures qui seraient nécessaires à la formation d'agglomérats résistants.

Une autre raison tient à la nature particulière de l'enveloppe (de type polymère par exemple) et à la déformabilité des capsules qui rend peu efficace des procédés tels que l'agglomération sous pression.

De façon plus précise, les agglomérats formés par les moyens traditionnels en respectant les contraintes de pression et de température inhérentes aux MCP présentent un caractère de friabilité trop important pour des applications industrielles, en particulier de type PSA. Une fraction de ceux-ci se brisent , ce qui pose des problèmes de mal distribution du fluide de procédé dans l'adsorbeur, ou de colmatage de filtre par création de fines poussières constituées de MCP.

Une troisième voie consiste à intégrer les microparticules de MCP dans une structure solide préexistante telle qu'une structure alvéolaire en « nid d'abeille » ou une mousse, un treillis, une grille...par exemple par collage sur les parois. De tels matériaux réalisables en laboratoire ne sont pas utilisables dans des unités industrielles de grande dimension (de volume supérieur à 1 $m^3$ et plus généralement supérieur à 10$m^3$) pour des raisons de fabrication ou de coût.

La présente invention se propose dès lors de pallier ces inconvénients par la réalisation d'agglomérats composés de MCP, de forme, de diamètre et de densité tels qu'un mélange de particules d'adsorbant et de ces agglomérats reste homogène dans l'espace et dans le temps au cours du fonctionnement d'unités de type PSA. En particulier la résistance mécanique de tels agglomérats (résistance à l'écrasement et à l'attrition) leur permet de rester intacts dans les conditions opératoires. Cette invention permet de réaliser de tels agglomérats en grande quantité et à bas coût.

La solution de l'invention est donc un procédé de fabrication d'un agglomérat sous forme de billes comprenant des microcapsules d'un matériau à changement de phase (MCP), caractérisé en ce que ledit procédé est réalisé par un procédé par granulation humide et séchage en lit fluidisé, comprenant une étape de pulvérisation d'une suspension comprenant au moins une solution aqueuse, de préférence de l'eau, et des microcapsules de MPC, dans un réacteur parcouru par un flux de gaz dirigé de bas en haut dudit réacteur.

Selon le cas, le procédé de fabrication de l'agglomérat selon l'invention peut comprendre l'une ou plusieurs des caractéristiques suivantes :

- la pression de pulvérisation est comprise entre 1 et 10 bar abs, de préférence inférieure à 3 bar abs, la pression du réacteur entre 0.9 et 1.1 bar abs, de préférence comprise entre 0,98 et 1,03, et la température du flux de gaz est comprise entre 40 et 200°C, de préférence comprise entre 60 et 90°C ; par pression de pulvérisation, on entend la pression en amont de la buse d'injection mise en oeuvre pour introduire la suspension ;
- la suspension comprend entre 10 à 50% en poids de microcapsules MCP, de préférence 20 à 30% en poids de microcapsules ;
- la suspension comprend des fibres carbonées ;
- la suspension présente un rapport fibres carbonées sur MCP compris entre 1 et 40% poids ;
- on adjoint 0,001 à 1% en poids de surfactant à la solution aqueuse, de préférence 0,01 à 0,1 % en poids ;
- le surfactant est un surfactant à base de siloxane ;
- la suspension comprend un liant représentant moins de 30 % en poids de la suspension, de préférence moins de 10% en poids de la suspension aqueuse ;
- le liant est du polyvinyl-alcool ou de la carboxymethyl cellulose ;
- la granulation humide comprend une étape pendant laquelle au moins une fraction d'au moins un constituant du granulat sous forme solide (MCP, liant, additif tel que fibres de carbone) est introduite séparément ;
- le matériau à changement de phase est choisi parmi les paraffines, les acides gras, les composés azotés, les composés oxygénés, les phényles et les sels hydratés ou un mélange de ces composés ;

- le séchage en lit fluidisé s'effectue par un gaz, de préférence par de l'air, à une température comprise entre 40 et 200 °C, de préférence entre 60 et 90°C ;
- le séchage en lit fluidisé s'effectue sous une pression comprise entre 0.9 et 1.1 bar abs, de préférence comprise entre 0.98 et 1.03 bar abs
- ledit procédé met en oeuvre un moyen d'extraire les agglomérats de taille ou masse donnée.

Plus précisément, dans un procédé de granulation humide et séchage en lit fluidisé, appliqué à la fabrication d'agglomérats destinés à être utilisés dans les procédés thermo cycliques, une suspension (mélange essentiellement homogène de particules solides dans un milieu liquide) contenant au minimum une solution aqueuse et les microparticules de MPC, est injectée, de manière préférentielle par pulvérisation, dans un réacteur parcouru par un flux de gaz chaud. Ce flux de gaz est essentiellement dirigé de bas en haut dans le dit réacteur de façon à maintenir en suspension les particules formées. Pour cette application, ce gaz sera préférentiellement de l'air atmosphérique, éventuellement partiellement séché par un moyen adéquat. La pression dans le réacteur est proche de la pression atmosphérique. Elle peut être légèrement en dessous de cette dernière lorsque le gaz est extrait mécaniquement du réacteur (extracteur de type ventilateur par exemple maintenant une dépression de quelques dizaines de millibar maximum). Au cours du temps, la suspension injectée enrobe de façon homogène les particules en mouvement leur donnant une forme essentiellement sphérique. Ce procédé est également appelé « spray coating » et on utilise le terme de « lit fluidisé » pour décrire le fonctionnement du réacteur.

Les paramètres opératoires (débits d'injection, débit d'air, pression, température) sont à adapter en fonction du type de granulateur utilisé selon les règles de l'art mais il est à noter que d'une façon générale ces conditions opératoires sont particulièrement adaptées à la nature des MPC avec des pressions maximales de quelques bars seulement à l'amont des buses d'injection (comprise généralement entre 1 et 10 bar abs) et des températures modérées ( qui peuvent rester inférieures à 100°C). On reste très largement en deçà des pressions de pastillage, d'extrusion (plusieurs dizaines de bars) ou d'activation des mélanges adsorbant/MCP.

Les MCP micro encapsulés se présentent sous la forme de microbilles d'un polymère formant une enveloppe imperméable contenant de la cire ou un hydrocarbure sature linéaire avec le nombre d'atomes de carbone variant entre 14 et 24. Les capsules d'aspect essentiellement sphérique ont un diamètre moyen de l'ordre de 1 à 20 micron. La dimension moyenne des microbilles utilisée lors des tests d'agglomération était de l'ordre de 5 micron, correspondant à un produit Micronal® de BASF.

Le solvant, c'est-à-dire la solution aqueuse, dont le rôle principal est de favoriser la dispersion des microparticules de MCP est préférentiellement de l'eau.

Outre son faible coût, son utilisation est simple et ne demande pas de précaution particulière.

La suspension peut généralement comprendre en plus de la solution aqueuse et des micro capsules de MCP :

- un surfactant (ou émulsifiant) dont le rôle est d'assurer une bonne dispersion et une bonne stabilité de la solution;
- un liant dont le rôle est d'améliorer l'adhésion des éléments constitutifs de la bille et par là les caractéristiques mécaniques des dites billes ;
- un additif spécifique de la ou des caractéristiques des billes que l'on veut modifier.

La quantité de ces différents produits est dans les exemples suivants exprimés en pour cent poids (par rapport à la totalité des ingrédients constituant la suspension) sauf notation contraire.

Ainsi, pour la composition globale d'une des suspensions citées plus bas en exemple, à savoir MCP 300g / solvent (eau) 449g / additif: Fibres de Carbone 50g / liant type PVA 200g / surfactant TEGO® Degussa (Evonik) 1g, on a les pourcentages caractéristiques suivants : MCP : 30%, liant : 20%, surfactant : 0.1%, rapport FC/MCP : 16.7%

Le surfactant est une molécule "tensioactive" qui peut être naturelle ou synthétique, avec la particularité de comporter une tête polaire (hydrophile) possédant une affinité pour l'eau, et plus généralement avec tout composé (solvant) polaire, et une queue apolaire (lipophile) formée le plus souvent d'une ou de plusieurs chaînes hydrocarbonées, ayant une affinité avec surfaces peu polaires comme c'est le cas des MCP. En particulier les surfactants à base de siloxane comme par exemple TEGO® de Degussa (Evonik) permettent d'obtenir une très bonne dispersion.

Un additif utilisé par la Demanderesse est constitué de fibres de carbone (FC) dont le rôle principal consiste à améliorer la conduction thermique des billes. D'autres additifs pourraient être utilisés suivant le but recherché (résistance, porosité...)

On notera que l'on peut introduire un certain nombre de variantes au procédé ainsi qu'il est décrit ici sans sortir du cadre de l'invention. En particulier, l'introduction des éléments constitutifs de la bille peuvent être introduit séparément dans le réacteur au lieu d'être introduit sous forme d'un « spray » unique. Par exemple, un -ou plusieurs- matériau solide, c'est-à-dire la poudre de MCP et/ou le liant et/ou l'additif peut être introduit par une buse, véhiculé par un flux gazeux. La solution aqueuse, le surfactant peuvent être alors être introduit séparément sous forme de spray liquide. Une partie du réacteur peut alors être consacrée à réaliser le mélange intime de ces ingrédients.

Le « démarrage » de la granulation, c'est-à-dire la formation de la petite particule de base qui sert ensuite de noyau pour la formation de la particule de dimension recherchée (généralement de 0.1 à 5mm) peut s'effectuer de plusieurs manières. Elle peut s'effectuer naturellement par introduction de la suspension dans le réacteur, éventuellement selon un premier mode opératoire (débits, pression) différent du mode opératoire final. La granulation peut s'effectuer également à partir de « nucléus » déjà formés préalablement à leur introduction dans le réacteur. Ces « nucléus » peuvent être des matériaux de nature différente de l'agglomérat crée, comme des grains de sable par exemple, mais également de fines particules - quelques dizaines de microns - obtenues par broyage d'agglomérats de MCP préalablement fabriqués (par exemple à partir de particules de dimensions hors fourchette retenue, c'est-à-dire trop petites ou trop grosses).

Ce type de réacteur à granulation humide et séchage en lit fluidisé a été développé essentiellement pour la fabrication de médicaments. Il en existe de plusieurs types suivant l'introduction des ingrédients comme décrit ci-dessus ou suivant la méthode d'extraction des particules formées. Les différents dispositifs utilisés dans les procédés à lits fluidisés pour permettre d'extraire des particules de dimension ou masse données s'appliquent ici et leur description ne rentrent pas dans le cadre de cette invention.

Les fibres carbonées, qui peuvent être contenues dans l'agglomérat selon l'invention, jouent le rôle de promoteurs à forte conductivité thermique. Dans ce cas, ce promoteur à forte conductivité thermique ne représente pas plus de 10% en volume de l'ensemble, le reste étant constitué du MCP qui assure l'efficacité thermique du dispositif. Idéalement, le promoteur à forte conductivité thermique a une conductivité thermique supérieure à 100 W/m/K, préférentiellement supérieure à 500 W/m/K.

Le liant peut-être choisi parmi:

a. Le groupe des résines thermoplastiques constitué par les résines: i. acrylonitrile-butadiène-styrène (ABS), ii. acrylonitrile-éthylène/propylène-styrène (AES), iii. méthylméthacrylate-butadiène-styrène (MBS), iv. acrylonitrile-butadiène-méthybnéthacrylate-styrène (ABMS), v. acrylonitrile-n-butylacrylate-styrène (AAS),
b. les gommes de polystyrène modifié ;
c. les résines de i. polystyrène, polyméthyl-méthacrylate, acétate de cellulose, polyamide, polyester, polyacrylonitrile, polycarbonate, polyphénylèneoxide, polycétone, polysulphone, polyphénylènesulfide ;
d. les résines : i. halogénées, fluorées ou chlorées, siliconées, polybenzimidazole ;
e. Le groupe des résines thermodurcissables constitué par les résines à base de phénol, urée, mélamine, xylène, diallylphthalate, époxy, aniline, furane, polyuréthane ;
f. Le groupe des élastomères thermoplastiques constitué des élastomères de type styrène comme les co-polymères bloc styrène-butadiène-styrène ou co-polymères bloc styrène-isoprène-styrène ou leur forme hydrogénée, les élastomères de type PVC, uréthane, polyester, polyamide, les élastomères thermoplastiques de type polybutadiène comme les résines 1,2-polybutadiène ou trans-1,4-polybutadiène; les polyéthylène chlorés, les élastomères thermoplastiques de type fluorés, les polyéthers esters et les polyéthers amides ;

g. Le groupe des polymères solubles dans l'eau constitué des polymères cellulosiques, les poly électrolytes, les polymères ioniques, les polymères acrylates, les polymères d'acide acrylique, la gomme arabique, les poly (vinyl pyrrolidone), poly (vinyl-alcool), poly (acide acrylique), poly(acide méthacrylique), sodium polyacrylate, polyacrylamide, poly (éthylène oxide), polyéthylène glycol, poly (éthylène formamide), polyhydroxyéther, poly (vinyl oxazolidinone), méthyl cellulose, éthyl cellulose, carboxyméthyl cellulose, éthyl (hydroxyéthyl) cellulose, sodium polyacrylate, leurs copolymères, et des mélanges de ceux-ci ;

h. Le groupe constitué par les polystyrène sulfonate (PSS), poly (1-vinyl pyrrolidone-co-vinyl acétate), poly(1- vinyl pyrrolidone-co- acide acrylique), poly (1-vinylpyrrolidone-co-dimethylaminoéthyl méthacrylate), polyvinyl sulfate, poly (sodium styrène acide sulfonique- co-acide maleique), dextran, dextran sulfate, gélatine, sérum albumine bovine, poly (méthyl méthacrylate-co-éthyl acrylate), polyallyl aminé, et leurs combinaisons et de préférence le groupe constitué de carboxyvinyl polymers (CPLs), hydroxypropyl cellulose (HPC), et carboxymethyl cellulose (CMC).

Préférentiellement, le liant est choisi parmi les groupes g et h

Le séchage en lit fluidisé s'effectue par un gaz, de préférence par de l'air, à une pression proche de la pression atmosphérique, de préférence avec une surpression ou une dépression de l'ordre de quelques dizaines de millibar au maximum.

L'invention porte aussi sur un agglomérat sous forme de billes composés de microcapsules d'un matériau à changement de phase (MCP), caractérisé en ce que ledit agglomérat est obtenu par un procédé selon l'invention et présente une dimension caractéristique comprise entre 0,1 et 5 mm et une densité en lit tassé de 300 à 1200 kg/m$^3$

Par « dimension caractéristique » de l'agglomérat, on entend le diamètre de celui-ci qui peut être défini comme suit. Pour une population de billes essentiellement sphériques mais dont les diamètres présentent une dispersion inhérente au procédé industriel de fabrication, on retient une définition classique : le diamètre équivalent d'une population de billes est le diamètre de billes identiques qui pour le même volume de lit donneraient la même surface totale. En effet, dès lors qu'on a déterminé la distribution en diamètre (c'est-à-dire qu'on a déterminé les différentes fractions Xi de diamètre Di, avec de préférence i supérieur ou égal à 5 pour obtenir une précision suffisante, par exemple par tamisage ou à partir d'appareils de traitement d'images), on obtient le diamètre équivalent par la formule :

$$1 / De = \sum i \quad (Xi / Di)$$

Par densité en lit tassé, on entend la densité maximale que l'on peut obtenir au remplissage d'un volume donné. Une méthode classique en laboratoire et retenue ici est celle dite des tamis croisés : les particules alimentent par le dessus une série tamis (généralement 2) de mailles supérieures aux diamètres des particules de sorte que l'écoulement des particules dans le récipient de test se fasse en pluie.

De préférence, ledit agglomérat présente une conductivité thermique supérieure à 0,2 W/m/K, preferentiellement supérieure à 0.6 W/m/K, et une résistance à l'écrasement supérieure à 2 N/mm$^2$, de préférence supérieure à 5 N/mm$^2$.

La résistance à l'écrasement est mesurée individuellement sur un nombre suffisant d'agglomérats de diamètre moyen d donné (25 minimum recueilli au hasard après tamisage) par un appareil adéquat. La valeur indiquée ici est la valeur moyenne divisée par la section équatoriale (Pi*d2/4) de la bille.

Par ailleurs, l'invention concerne aussi un réacteur ou un adsorbeur, caractérisé en ce que ledit réacteur ou adsorbeur comprend un lit de particules d'adsorbant comprenant, en outre, des agglomérats de billes contenant des micro capsules d'un matériau à changement de phase (MCP) selon l'invention.

De préférence, lesdits agglomérats sont mélangés aux particules d'adsorbant de manière à former un lit composite.

Le mélange peut être constitué avant le remplissage ou pendant le remplissage au moyen de dispositifs adéquats.

L'invention concerne aussi un procédé PSA de séparation et/ou de purification par adsorption d'un mélange gazeux à plusieurs constituants mettant en oeuvre un ou plusieurs adsorbeurs, caractérisé en ce que chaque adsorbeur contient un lit de particules d'adsorbant comprenant, en outre, des agglomérats de billes contenant des microcapsules d'un matériau à changement de phase (MCP) selon l'invention.

Ledit procédé peut être choisi parmi les procédés PSA H$_2$, PSA O$_2$, PSA N$_2$ et PSA CO$_2$ et/ou les procédés thermo cycliques au moyen desquels on produit un gaz riche en un au moins des constituants suivants H$_2$, O$_2$, N$_2$, CO, CH4, CO$_2$ ou leurs mélanges, de préférence un gaz contenant au moins 50% en volume de H$_2$, O$_2$, N$_2$, CO, CH4, CO$_2$ ou leurs mélanges.

L'invention concerne aussi un procédé de stockage/ déstockage de gaz mettant en oeuvre un ou plusieurs adsorbeurs, caractérisé en ce que chaque adsorbeur contient un lit de particules d'adsorbant comprenant, en outre, des agglomérats de billes contenant des microcapsules d'un matériau à changement de phase (MCP) selon l'invention.

Le dit gaz pouvant être majoritairement du gaz naturel, de l'air, de l'azote, de l'hydrogène, de l'argon, du méthane ou du $CO_2$.

Conformément à l'invention et à titre d'exemples non limitatifs des agglomérats présentant des caractéristiques intéressantes ont été réalisés avec les différentes compositions de suspension suivantes :

> 1. :MCP 300g / solvent (eau) 679g / liant type PVA (polyvinil alcool) 20g / surfactant TEGO® Degussa (Evonik) 1 g
> 2. :MCP 300g / solvent (eau) 689g / liant type CMC (carboxymethyl Cellulose) 10g / surfactant TEGO® Degussa (Evonik) 1 g
> 3. :MCP 250g / solvent (eau) 549g /FC 100g / liant type PVA 10g / surfactant TEGO® Degussa (Evonik) 1 g
> 4. MCP 300g / solvent (eau) 449g / FC 50g / liant type PVA 200g / surfactant TEGO® Degussa (Evonik) 1 g
> 5. MCP 300g / solvent (eau) 679g / FC 20g / liant type CMC 1g
> 6. MCP 300g/ solvent (eau) 694.59g / liant type CMC 5g / surfactant TEGO® Degussa (Evonik) 0.5g
> 7. MCP 300g / solvent (eau) 699.5g / liant type CMC 0.5g
> 8. MCP 300g / solvent (eau) 680g / liant type PVA 20g

**Revendications**

1. Procédé de fabrication d'un agglomérat sous forme de billes composé de microcapsules d'un matériau à changement de phase (MCP), **caractérisé en ce que** ledit procédé est réalisé par un procédé de granulation humide et séchage en lit fluidisé, comprenant une étape de pulvérisation d'une suspension comprenant au moins une solution aqueuse et des microcapsules de MCP, dans un réacteur parcouru par un flux de gaz dirigé de bas en haut dudit réacteur.

2. Procédé selon la revendication 1, **caractérisé en ce que** la pression de pulvérisation est comprise entre 1 et 10 bar abs, de préférence inférieure à 3 bar abs, la pression du réacteur entre 0.9 et 1.1 bar abs, de préférence comprise entre 0,98 et 1,03, et la température du flux de gaz est comprise entre 40 et 200°C, de préférence comprise entre 60 et 90°C.

3. Procédé selon la revendication l'une des revendications 1 ou 2, **caractérisé en ce que** la suspension comprend entre 10 à 50% en poids de microcapsules MCP, de préférence 20 à 30% en poids de microcapsules.

4. Procédé selon l'une des revendications 1 à 3, **caractérisé en ce que** la suspension comprend des fibres carbonées.

5. Procédé selon la revendication 4, **caractérisé en ce que** la suspension présente un rapport fibres carbonées sur MCP compris entre 1 et 40% poids.

6. Procédé selon l'une des revendications précédentes, **caractérisé en ce qu'**on adjoint 0,001 à 1% en poids de surfactant à la solution aqueuse, de préférence 0,01 à 0,1 % en poids.

7. Procédé selon la revendication 6, **caractérisé en ce que** le surfactant est un surfactant à base de siloxane.

8. Procédé selon l'une des revendications précédentes, **caractérisé en ce que** la suspension comprend un liant représentant moins de 30 % en poids de la suspension, de préférence moins de 10% en poids de la suspension aqueuse.

9. Procédé selon la revendication 8, **caractérisé en ce que** le liant est du polyvinyl-alcool ou de la carboxymethyl cellulose.

10. Procédé selon la revendication 1, **caractérisé en ce que** la granulation humide comprend une étape pendant laquelle au moins une fraction d'au moins un constituant du granulat sous forme solide est introduite séparément.

11. Procédé selon l'une des revendications 1 à 10, **caractérisé en ce que** le matériau à changement de phase est choisi parmi les paraffines, les acides gras, les composés azotés, les composés oxygénés, les phényles et les sels hydratés ou un mélange de ces composés.

12. Procédé selon l'une des revendications 1 à 11, **caractérisé en ce que** le séchage en lit fluidisé s'effectue par un gaz, de préférence par de l'air, à une température comprise entre 40 et 200 °C, de préférence entre 60 et 90°C.

13. Procédé selon l'une des revendications 1 à 12, **caractérisé en ce que** ledit procédé met en oeuvre un moyen d'extraire les agglomérats de taille ou masse donnée.

**Patentansprüche**

1. Verfahren zum Herstellen eines Agglomerats in Form von Kügelchen, das aus Mikrokapseln eines Phasenwechselmaterials (PCM) besteht, **dadurch gekennzeichnet, dass** das Verfahren durch ein Verfahren der Nassgranulierung und Fließbetttrocknung durchgeführt wird, das einen Schritt der Pulverisierung einer Suspension, die mindestens eine wässrige Lösung und PCM-Mikrokapseln enthält, in einem Reaktor umfasst, der von einem Gasstrom, der von unten nach oben durch den Reaktor geleitet wird, durchströmt wird.

2. Verfahren nach Anspruch 1, **dadurch gekennzeichnet, dass** der Pulverisierungsdruck zwischen 1 und 10 bar abs., bevorzugt weniger als 3 bar abs., beträgt, der Reaktordruck zwischen 0,9 und 1,1 bar abs., bevorzugt zwischen 0,98 und 1,03, beträgt, und die Temperatur des Gasstroms zwischen 40 und 200 °C, bevorzugt zwischen 60 und 90 °C, beträgt.

3. Verfahren nach einem der Ansprüche 1 oder 2, **dadurch gekennzeichnet, dass** die Suspension zwischen 10 und 50 Gew.-% PCM-Mikrokapseln, bevorzugt zwischen 20 und 30 Gew.-% Mikrokapseln, enthält.

4. Vorrichtung nach einem der Ansprüche 1 bis 3, **dadurch gekennzeichnet, dass** die Suspension Carbonfasern enthält.

5. Verfahren nach Anspruch 4, **dadurch gekennzeichnet, dass** die Suspension ein Verhältnis zwischen Carbonfasern und PCM aufweist, das zwischen 1 und 40 Gew.-% beträgt.

6. Verfahren nach einem der vorhergehenden Ansprüche, **dadurch gekennzeichnet, dass** der wässrigen Lösung 0,001 bis 1 Gew.-%, bevorzugt 0,01 bis 0,1 Gew.-%, Surfactant zugegeben wird.

7. Verfahren nach Anspruch 6, **dadurch gekennzeichnet, dass** das Surfactant ein Surfactant auf Siloxan-Basis ist.

8. Verfahren nach einem der vorhergehenden Ansprüche, **dadurch gekennzeichnet, dass** die Suspension ein Bindemittel enthält, das weniger als 30 Gew.-% der Suspension, bevorzugt weniger als 10 Gew.-% der wässrigen Lösung darstellt.

9. Verfahren nach Anspruch 8, **dadurch gekennzeichnet, dass** das Bindemittel Polyvinylalkohol oder Carboxymethylcellulose ist.

10. Verfahren nach Anspruch 1, **dadurch gekennzeichnet, dass** die Nassgranulierung einen Schritt umfasst, bei dem mindestens eine Fraktion von mindestens einem Bestandteil des Granulats in Form eines Feststoffes separat zugeführt wird.

11. Vorrichtung nach einem der Ansprüche 1 bis 10, **dadurch gekennzeichnet, dass** das Phasenwechselmaterial gewählt ist aus den Paraffinen, den Fettsäuren, den Stickstoffverbindungen, den Sauerstoffverbindungen, den Phenlyen und den hydratisierten Salzen oder einem Gemisch dieser Verbindungen.

12. Vorrichtung nach einem der Ansprüche 1 bis 11, **dadurch gekennzeichnet, dass** die Fließbetttrocknung durch ein Gas, bevorzugt durch Luft, bei einer Temperatur zwischen 40 und 200 °C, bevorzugt zwischen 60 und 90 °C, erfolgt.

13. Vorrichtung nach einem der Ansprüche 1 bis 12, **dadurch gekennzeichnet, dass** das Verfahren ein Mittel zum Extrahieren der Agglomerate einer bestimmten Größe oder Masse verwendet.

**Claims**

1. Process for manufacturing an agglomerate in the form of beads which is made up of microcapsules of a phase change material (PCM), **characterised in that** the process is carried out by a process of wet granulation and drying in a fluidised bed, comprising a step of spraying a suspension comprising at least one aqueous solution and microcapsules of PCM in a reactor through which a flux of gas is passed in the direction from the bottom of said reactor to the top.

2. Process according to claim 1, **characterised in that** the spraying pressure is between 1 and 10 bar abs, preferably less than 3 bar abs, the pressure of the reactor is between 0.9 and 1.1 bar abs, preferably between 0.98 and 1.03, and the temperature of the flux of gas is between 40 and 200°C, preferably between 60 and 90°C.

3. Process according to either of claim 1 or 2, **characterised in that** the suspension comprises between 10 and 50 % by weight of PCM microcapsules, preferably 20 to 30 % by weight of microcapsules.

4. Process according to one of claims 1 to 3, **characterised in that** the suspension comprises carbon fibres.

5. Process according to claim 4, **characterised in that** the suspension has a ratio of carbon fibres to PCM of between 1 and 40 % by weight.

6. Process according to one of the preceding claims, **characterised in that** 0.001 to 1 % by weight of surfactant, preferably 0.01 to 0.1 % by weight, is added to the aqueous solution.

7. Process according to claim 6, **characterised in that** the surfactant is a siloxane-based surfactant.

8. Process according to one of the preceding claims, **characterised in that** the suspension contains a binder constituting less than 30 % by weight of the suspension, preferably less than 10 % by weight of the aqueous suspension.

9. Process according to claim 8, **characterised in that** the binder is polyvinyl alcohol or carboxymethyl cellulose.

10. Process according to claim 1, **characterised in that** the wet granulation comprises a step during which at least a fraction of at least one constituent of the granular material in solid form is introduced separately.

11. Process according to one of claims 1 to 10, **characterised in that** the phase change material is selected from among the paraffins, the fatty acids, the nitrogen compounds, the oxygen compounds, the phenyls and the hydrated salts or a mixture of these compounds.

12. Process according to one of claims 1 to 11, **characterised in that** the drying in the fluidised bed is carried out by means of a gas, preferably air, at a temperature of between 40 and 200°C, preferably between 60 and 90°C.

13. Process according to one of claims 1 to 12, **characterised in that** the process uses a means of extracting the agglomerates of a given size or mass.

## RÉFÉRENCES CITÉES DANS LA DESCRIPTION

**Documents brevets cités dans la description**

- EP 1188470 A
- US 4971605 A
- FR 2891159 A
- DE 19711393 C1
- EP 1536128 A